# EUROPEAN PATENT APPLICATION

(11) **EP 4 834 566 A1**
(43) Date of publication of application: **04.11.2026**
(21) Application number: 24910701.2
(22) Date of filing: 10.12.2024
(51) Int. Cl.: B29C 64/209, B29C 64/295, B33Y 30/00

(54) **NOZZLE FOR 3D PRINTER, PREHEATING ELEMENT, AND NOZZLE ASSEMBLY**

(30) Priority: 31.12.2023 CN 202311872338
(71) Applicant: Zhengzhou Suzao Technology Co., Ltd., Zhengzhou, Henan 450048 (CN)
(72) Inventor: SHEN, Kang, Zhengzhou, Henan 450066 (CN); WANG, Qindong, Zhengzhou, Henan 450066 (CN); DUAN, Zhihui, Zhengzhou, Henan 450066 (CN); CHENG, Shuo, Zhengzhou, Henan 450066 (CN); SU, Dongdong, Zhengzhou, Henan 450066 (CN); YUE, Liuyang, Zhengzhou, Henan 450066 (CN)
(74) Representative: Dilg, Haeusler, Schindelmann Patentanwaltsgesellschaft mbH
(86) International application number: PCT/CN2024/138186
(87) International publication number: WO 2025/139770

(57) **Abstract**

Embodiments of the present application provide a nozzle for a 3D printer, a preheating element, and a nozzle assembly. The nozzle comprises a nozzle body, a flow passage is disposed within the nozzle body along the axial direction thereof, the flow passage comprises an upper communication section and a lower heating section, and the inner diameter of the communication section is smaller than the inner diameter of the heating section. A flow guiding column is disposed within the heating section, a gap is formed between a side outer wall of the flow guiding column and a side inner wall of the heating section, the communication section is used for preheating and preliminary melting of a consumable within said section, the heating section is internally provided with the flow guiding column, the preliminarily melted consumable enters a narrow gap between the flow guiding column and the heating section, so that the consumable changes from a solid cylindrical shape to a hollow cylindrical shape, which increases the contact area with the nozzle body, thereby increasing the heat transfer between the nozzle body and the consumable and improving the melting efficiency. Moreover, the flow guiding column can also be thermally connected to the nozzle body, so that the hollow cylindrical consumable is heated both internally and externally, further improving the melting efficiency and ensuring efficient and rapid melting of the consumable within the nozzle.

## Description

The present invention claims priority to Chinese Patent Application No. 202311872338.1, filed with the China Intellectual Property Administration on December 31, 2023 and entitled "NOZZLE FOR 3D PRINTER, PREHEATING ELEMENT, AND NOZZLE ASSEMBLY", the entire contents of which are incorporated herein by reference.

### TECHNICAL FIELD

The present invention relates to the technical field of 3D printers, and in particular, to a nozzle for a 3D printer, a preheating element, and a nozzle assembly.

### BACKGROUND

Unlike traditional machining that manufactures parts by subtracting material, 3D printing manufactures parts by adding material. Parts are manufactured using a 3D printer according to a digital model, the 3D printer melts a filament and extrudes it from a printer nozzle, and after the melted filament leaves the nozzle of the printer, the filament becomes solid, thereby achieving 3D printing of parts.

The filament enters from a larger inlet hole at an upper end of the nozzle, is heated and melted in the nozzle with an external heat source, and is then extruded from a smaller outlet hole at an end of the nozzle.

In order to shorten printing time and improve printing efficiency, the extrusion efficiency of the outlet hole at the end of the nozzle is increased. However, as a result, the filament cannot be fully melted in the nozzle, thereby reducing extrusion efficiency, and also affecting printing quality, thus limiting the printing speed of the 3D printer.

### SUMMARY

Embodiments of the present invention provide a nozzle for a 3D printer, a preheating element, and a nozzle assembly, so as to solve or alleviate one or more technical problems in the prior art.

As an aspect of embodiments of the present invention, embodiments of the present invention provide a nozzle for a 3D printer, comprising a nozzle body, wherein a flow passage is disposed within the nozzle body along an axial direction of the nozzle body, the flow passage comprises an upper communication section and a lower heating section, an inner diameter of the communication section is smaller than an inner diameter of the heating section, a flow guiding column is disposed within the heating section, a gap is formed between a side outer wall of the flow guiding column and a side inner wall of the heating section, and a flow guiding end of the flow guiding column faces a junction between the communication section and the heating section.

In an embodiment, a smooth transition section is disposed between the communication section and the heating section, the flow guiding end of the flow guiding column is located at the transition section, and a gap is formed between an outer side of the flow guiding end and an inner side of the transition section.

In an embodiment, the flow guiding end of the flow guiding column is in a conical shape with a smaller upper portion and a larger lower portion, and an end portion of the flow guiding end is located at a junction between the communication section and the heating section.

In an embodiment, a through hole is disposed at an axis center of the flow guiding column.

In an embodiment, an expansion section is coaxially disposed between the communication section and the heating section, a cross-sectional area of the expansion section is larger than a cross-sectional area of the communication section or the heating section, the expansion section smoothly transitions to the communication section and the heating section, and the flow guiding end of the flow guiding column is located within a space formed by the expansion section.

In an embodiment, a transition section is disposed between the communication section and the heating section, an expansion section is disposed at a middle portion of the heating section, the transition section is of a cone frustum-shaped hole with a smaller upper portion and a larger lower portion, and the expansion section is coaxially disposed with the heating section and a cross-sectional area of the expansion section is larger than a cross-sectional area of the heating section.

In an embodiment, the flow guiding end of the flow guiding column is located at the transition section, a gap is formed between an outer side of the flow guiding end and an inner side of the transition section, an outer diameter of a portion of the flow guiding column at the expansion section is larger than an outer diameter of a portion of the flow guiding column above the expansion section, a plurality of outwardly protruding guide contact bars are circumferentially and uniformly distributed on an outer side of a portion of the flow guiding column below the expansion section, the guide contact bars are in a long strip shape disposed along an axial direction of the flow guiding column, outer side surfaces of the guide contact bars are in an outwardly protruding semi-circular shape, and the guide contact bars are integrally formed with the flow guiding column and are tangent to and in contact with an inner wall of a portion of the heating section below the expansion section.

In an embodiment, annular grooves are transversely disposed on an inner wall of the heating section, and the grooves are a plurality of grooves arranged at intervals in array along an axial direction of the heating section; or annular grooves are coaxially disposed on an outer side of the flow guiding column, and the grooves are a plurality of grooves arranged at intervals in array along an axial direction of the flow guiding column.

In an embodiment, a spiral groove is disposed on the heating section, a top surface of the groove is in contact with a side wall of the flow guiding column, and a communicated gap is formed between a bottom surface of the groove and the side wall of the flow guiding column; or a spiral groove is disposed on an outer side of the flow guiding column, a top surface of the groove is in contact with an inner wall of the heating section, and a communicated gap is formed between a bottom surface of the groove and the inner wall of the heating section.

In an embodiment, a plurality of outwardly protruding guide contact bars are circumferentially and uniformly distributed on an outer side of a middle portion of the flow guiding column, the guide contact bars are in a long strip shape disposed along an axial direction of the flow guiding column, outer side surfaces of the guide contact bars are in an outwardly protruding semi-circular shape, and the guide contact bars are integrally formed with the flow guiding column and are tangent to and in contact with or in an interference fit with an inner wall of the heating section.

In an embodiment, the flow guiding column is provided with a pressure relief groove, the pressure relief groove is disposed on an upper portion of the flow guiding column along a radial direction of the flow guiding column, a longitudinal section of the pressure relief groove is in a ∧ shape, a tip of the pressure relief groove is located at a tip of the flow guiding end, and two ends of the pressure relief groove respectively communicate to two sides of the flow guiding column.

In an embodiment, an inwardly recessed pressure relief groove is disposed on a side surface of the flow guiding column, the pressure relief groove is in a vertical long strip shape, the pressure relief grooves are a plurality of grooves circumferentially and uniformly distributed along an axis center of the flow guiding column, and a cross-section of the pressure relief groove is rectangular, circular-segment shaped, or triangular.

In an embodiment, the flow guiding column comprises a plurality of flow guiding tubes, a cross-section of each flow guiding tube is in a regular polygonal shape, the plurality of flow guiding tubes are coaxially and alternately nested with each other, an edge of an inner flow guiding tube is located at a middle portion of an inner side surface of an outer flow guiding tube, and the flow guiding end at an upper portion of the flow guiding column is in a conical shape with a smaller upper portion and a larger lower portion.

In an embodiment, the flow guiding column comprises a plurality of flow guiding tubes, a cross-section of each of all the flow guiding tubes is in an identical planar geometric shape, the plurality of flow guiding tubes are coaxially nested with each other, and a gap is formed between an outer side surface of an inner flow guiding tube and an inner side surface of an outer flow guiding tube; and
the flow guiding end at an upper portion of the flow guiding column is in a conical shape with a smaller upper portion and a larger lower portion; or height values of all the flow guiding tubes decrease sequentially from inside to outside; or height values of all the flow guiding tubes increase sequentially from inside to outside.

In an embodiment, the flow guiding column is coaxially rotatably or fixedly disposed within the heating section, and a middle portion of the flow guiding column is in a spiral blade shape.

In an embodiment, a cross-section of the flow guiding column is in a cross shape or a linear shape, the flow guiding column spirally rotates along an axis center thereof, and an outer diameter of a lower portion of the flow guiding column is larger than an outer diameter of an upper portion of the flow guiding column.

In an embodiment, a longitudinal section of the flow guiding end of the flow guiding column is in a triangular shape with a tip facing upward, and an end portion of the flow guiding end is located at a junction between the communication section and the heating section.

In an embodiment, a cross-section of the flow guiding end of the flow guiding column is in a cross shape, a longitudinal section of each side of the cross-shaped flow guiding end is in a triangular shape with a tip facing upward, and an end portion of the flow guiding end is located at a junction between the communication section and the heating section.

In an embodiment, the flow guiding column is in a straight tubular shape with the flow guiding end closed and the other end open, a plurality of sets of hole groups are arranged at intervals in array along an axial direction of the flow guiding column, each hole group comprises a plurality of through holes, and one end of each through hole communicates to an interior of the flow guiding column and the other end communicates to a gap formed between the flow guiding column and the heating section.

In an embodiment, an end portion of the flow guiding end of the flow guiding column is provided with a wear-resistant portion made of a wear-resistant material.

As another aspect of embodiments of the present invention, embodiments of the present invention further provide a preheating element for a 3D printer, the preheating element is configured to be connected to the nozzle of any one of the above embodiments, and the preheating element is disposed at a front end of the communication section of the flow passage of the nozzle body of the nozzle, a preheating channel is disposed at a middle portion of the preheating element along an axial direction of the preheating element, a lower end of the preheating channel communicates to the communication section of the flow passage of the nozzle body, and the preheating element is thermally conductively connected to a heat source or directly connected to the heat source.

In an embodiment, an introduction section is disposed at an upper portion of the preheating channel, the preheating channel comprises one removal section and a plurality of flow guiding sections, the removal section is coaxially disposed with the introduction section, the flow guiding sections are disposed at an outer side of the removal section, and a side of each flow guiding section adjacent to the removal section communicates to the removal section; and
the removal section is in a multi-step stepped hole shape with a larger upper portion and a smaller lower portion.

In an embodiment, the preheating channel comprises one removal section and a plurality of flow guiding sections, a cross-section of the removal section is circular, the plurality of flow guiding sections are circumferentially and uniformly distributed along the removal section, and a side of each flow guiding section adjacent to the removal section communicates to the removal section; and
a cross-section of each flow guiding section is in a circular-segment shape or a rectangular shape.

In an embodiment, a cross-section of the preheating channel is circular, a removal member is disposed at a lower portion of the preheating channel, the removal member is in a polygonal tubular shape, and an edge of the removal member is located at an inner wall of the preheating channel.

In an embodiment, a cross-section of the preheating channel is circular, a removal member is disposed at a lower portion of the preheating channel, the removal member is in a long strip shape disposed along an axial direction of a side wall of the preheating channel, and a plurality of removal members are circumferentially and uniformly distributed at intervals along an inner wall of the preheating channel.

As yet another aspect of embodiments of the present invention, embodiments of the present invention further provide a nozzle assembly for a 3D printer, wherein the nozzle assembly comprises the nozzle for a 3D printer and the preheating element for a 3D printer.

In the above technical solution adopted by the embodiments of the present invention, the flow passage of the nozzle body comprises the upper communication section and the lower heating section, the communication section is configured to preheat and preliminarily melt a filament therein, the flow guiding column is disposed within the heating section, the preliminarily melted filament enters a clearance between the flow guiding column and the heating section, so that the filament changes from a solid cylindrical shape to a hollow cylindrical shape and an outer diameter thereof is increased, thereby increasing a contact area with the nozzle body, thereby increasing heat transfer between the nozzle body and the filament and improving melting efficiency, and the flow guiding column can also be thermally conductively connected to the nozzle body, so that the hollow cylindrical filament is heated both internally and externally, further improving melting efficiency and ensuring efficient and rapid melting of the filament in the nozzle.

The preheating element is disposed at an upper side of the communication section, which increases a preliminary melting step of the filament, and in the preheating element, the melted filament can also be peeled off from the unmelted filament, so that the preheating element directly heats the unmelted filament after peeling, further improving melting efficiency.

The above summary is for illustrative purposes only and is not intended to be limiting in any way. In addition to the illustrative aspects, embodiments, and features described above, further aspects, embodiments, and features of the present invention will become readily apparent from reference to the drawings and the following detailed description.

### BRIEF DESCRIPTION OF THE DRAWINGS

In the drawings, unless otherwise specified, the same reference numerals throughout the plurality of drawings denote the same or similar components or elements. The drawings are not necessarily drawn to scale. It should be understood that the drawings depict only some embodiments according to the present invention, and should not be considered as limiting the scope of the present invention.
FIG. 1 is a first schematic structural diagram of a nozzle according to an embodiment of the present invention;
FIG. 2 is a second schematic structural diagram of a nozzle according to an embodiment of the present invention;
FIG. 3 is a first schematic structural diagram of a flow guiding column of a nozzle according to an embodiment of the present invention;
FIG. 4 is a second schematic structural diagram of a flow guiding column of a nozzle according to an embodiment of the present invention;
FIG. 5 is a third schematic structural diagram of a nozzle according to an embodiment of the present invention;
FIG. 6 is a fourth schematic structural diagram of a nozzle according to an embodiment of the present invention;
FIG. 7 is a fifth schematic structural diagram of a nozzle according to an embodiment of the present invention;
FIG. 8 is a cross-sectional view taken along line A-A in FIG. 7;
FIG. 9 is a third schematic structural diagram of a flow guiding column of a nozzle according to an embodiment of the present invention;
FIG. 10 is a sixth schematic structural diagram of a nozzle according to an embodiment of the present invention;
FIG. 11 is a seventh schematic structural diagram of a nozzle according to an embodiment of the present invention;
FIG. 12 is a fourth schematic structural diagram of a flow guiding column of a nozzle according to an embodiment of the present invention;
FIG. 13 is an eighth schematic structural diagram of a nozzle according to an embodiment of the present invention;
FIG. 14 is a ninth schematic structural diagram of a nozzle according to an embodiment of the present invention;
FIG. 15 is a tenth schematic structural diagram of a nozzle according to an embodiment of the present invention;
FIG. 16 is an eleventh schematic structural diagram of a nozzle according to an embodiment of the present invention;
FIG. 17 is a fifth schematic structural diagram of a flow guiding column of a nozzle according to an embodiment of the present invention;
FIG. 18 is a sixth schematic structural diagram of a flow guiding column of a nozzle according to an embodiment of the present invention;
FIG. 19 is a seventh schematic structural diagram of a flow guiding column of a nozzle according to an embodiment of the present invention;
FIG. 20 is an eighth schematic structural diagram of a flow guiding column of a nozzle according to an embodiment of the present invention;
FIG. 21 is a ninth schematic structural diagram of a flow guiding column of a nozzle according to an embodiment of the present invention;
FIG. 22 is a tenth schematic structural diagram of a flow guiding column of a nozzle according to an embodiment of the present invention;
FIG. 23 is an eleventh schematic structural diagram of a flow guiding column of a nozzle according to an embodiment of the present invention;
FIG. 24 is a twelfth schematic structural diagram of a flow guiding column of a nozzle according to an embodiment of the present invention;
FIG. 25 is a top view of FIG. 24;
FIG. 26 is a thirteenth schematic structural diagram of a flow guiding column of a nozzle according to an embodiment of the present invention;
FIG. 27 is a fourteenth schematic structural diagram of a flow guiding column of a nozzle according to an embodiment of the present invention;
FIG. 28 is a fifteenth schematic structural diagram of a flow guiding column of a nozzle according to an embodiment of the present invention;
FIG. 29 is a sixteenth schematic structural diagram of a flow guiding column of a nozzle according to an embodiment of the present invention;
FIG. 30 is a seventeenth schematic structural diagram of a flow guiding column of a nozzle according to an embodiment of the present invention;
FIG. 31 is an eighteenth schematic structural diagram of a flow guiding column of a nozzle according to an embodiment of the present invention;
FIG. 32 is a nineteenth schematic structural diagram of a flow guiding column of a nozzle according to an embodiment of the present invention;
FIG. 33 is a twentieth schematic structural diagram of a flow guiding column of a nozzle according to an embodiment of the present invention;
FIG. 34 is a twenty-first schematic structural diagram of a flow guiding column of a nozzle according to an embodiment of the present invention;
FIG. 35 is a twenty-second schematic structural diagram of a flow guiding column of a nozzle according to an embodiment of the present invention;
FIG. 36 is a twenty-third schematic structural diagram of a flow guiding column of a nozzle according to an embodiment of the present invention;
FIG. 37 is a twenty-fourth schematic structural diagram of a flow guiding column of a nozzle according to an embodiment of the present invention;
FIG. 38 is a first schematic structural diagram of a preheating element according to an embodiment of the present invention;
FIG. 39 is a top view of FIG. 38;
FIG. 40 is a top view of a preheating element according to an embodiment of the present invention;
FIG. 41 is a second schematic structural diagram of a preheating element according to an embodiment of the present invention;
FIG. 42 is a top view of FIG. 41;
FIG. 43 is a third schematic structural diagram of a preheating element according to an embodiment of the present invention;
FIG. 44 is a top view of FIG. 43;
FIG. 45 is a schematic structural diagram of a nozzle assembly according to an embodiment of the present invention; and
FIG. 46 is a schematic structural diagram of a nozzle assembly according to another embodiment of the present invention.

### Reference Numerals:

1-nozzle body; 2-flow passage; 3-flow guiding column; 4-preheating element; 5-preheating channel; 201-communication section; 202-heating section; 6-heating ring; and 7-nozzle.

### DETAILED DESCRIPTION OF THE EMBODIMENTS

In the following, only certain exemplary embodiments are briefly described. As those skilled in the art can recognize, the described embodiments can be modified in various different ways without departing from the spirit or scope of the present invention. Therefore, the drawings and descriptions are regarded as illustrative in nature rather than restrictive.

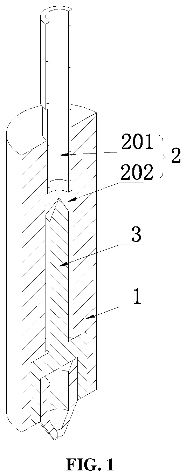

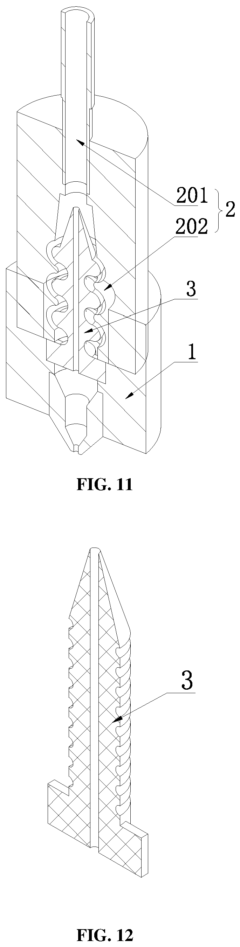

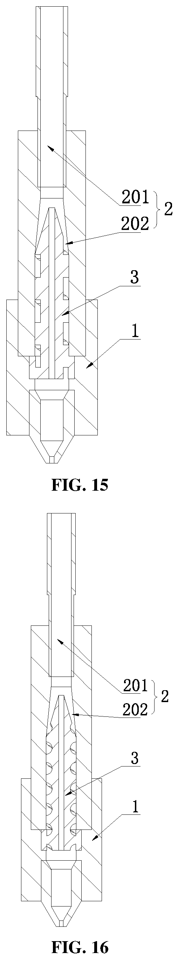

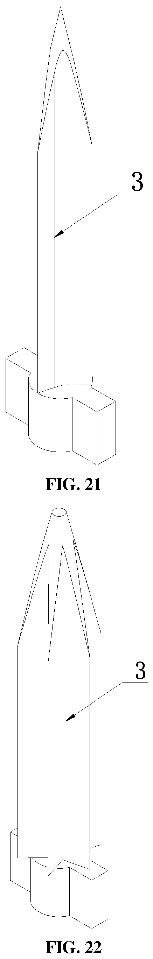

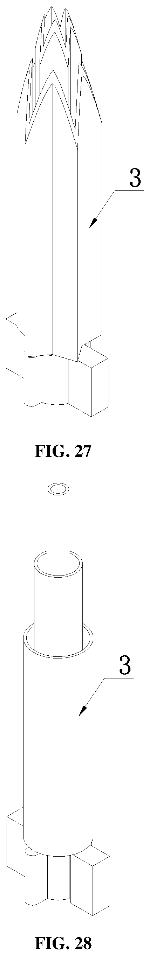

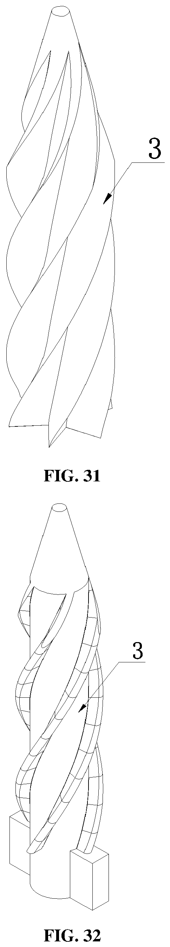

According to an aspect of embodiments of the present invention, embodiments of the present invention provide a nozzle for a 3D printer, and the nozzle for a 3D printer according to embodiments of the present invention is described below in conjunction with FIGs. 1-37.

As shown in FIG. 1, the nozzle for a 3D printer of this embodiment comprises a nozzle body 1, a flow passage 2 is disposed within the nozzle body 1 along an axial direction of the nozzle body 1, the flow passage 2 comprises an upper communication section 201 and a lower heating section 202, the communication section 201 and the heating section 202 are in a stepped-hole structure with a smaller upper portion and a larger lower portion, a flow guiding column 3 is disposed within the heating section 202, a gap is formed between a side outer wall of the flow guiding column 3 and a side inner wall of the heating section 202, and a flow guiding end of the flow guiding column 3 faces a junction between the communication section 201 and the heating section 202.

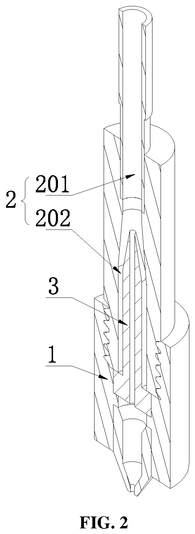

As shown in FIG. 2, in order to improve flow efficiency of a filament melted in the communication section 201, thereby improving extrusion efficiency. A smooth transition section is disposed between the communication section 201 and the heating section 202, the flow guiding end of the flow guiding column 3 is located at the transition section, and a gap is formed between an outer side of the flow guiding end and an inner side of the transition section.

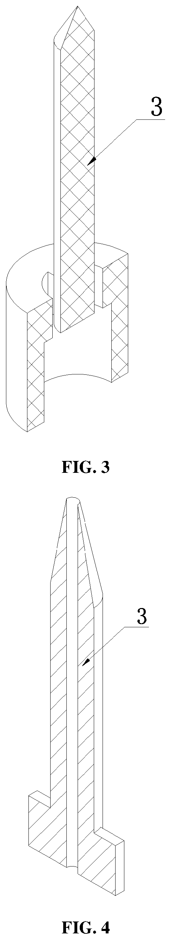

As shown in FIG. 3, in order to facilitate uniform entry of a filament in the communication section 201 into a gap between the flow guiding column 3 and the heating section 202, the flow guiding end of the flow guiding column 3 is in a conical shape with a smaller upper portion and a larger lower portion, and an end portion of the flow guiding end is located at a junction between the communication section 201 and the heating section 202.

As shown in FIG. 4, to further improve flow efficiency of a melted filament, and peel off a portion melted on an outer side of a middle portion of the filament so that an unmelted portion is heated separately, a through hole is disposed at an axis center of the flow guiding column 3, a diameter of the through hole is smaller than a diameter of the filament, a melted portion on an outer side of the filament can more easily enter a gap between the flow guiding column 3 and the heating section 202, and an unmelted portion at an axis center of the filament enters the through hole; and an upper end of the through hole is in a pointed shape, and if a diameter of the unmelted portion is larger than an inner diameter of the through hole, the upper end of the through hole cuts and separates the unmelted portion, thereby improving melting efficiency.

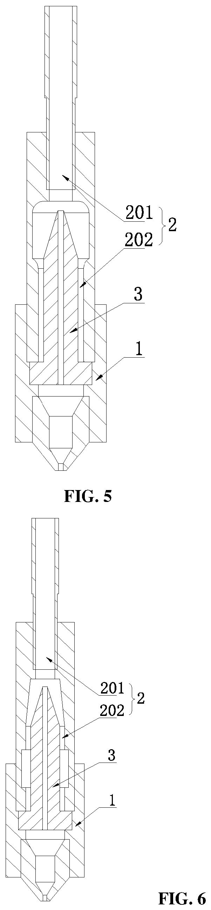

As shown in FIG. 5, during printing, according to specific requirements, an extrusion amount of the nozzle varies at different time periods, and a melting efficiency of the nozzle is a fixed value. In order to ensure that a sufficient amount of fully melted filament can be extruded when the extrusion amount is large, in this embodiment, a volume in the nozzle is increased, and when the extrusion amount required at a certain time period is small, an excess of melted filament is stored in the nozzle and extruded when needed; and to this end, an expansion section is coaxially disposed between the communication section 201 and the heating section 202, a cross-sectional area of the expansion section is larger than a cross-sectional area of the communication section 201 or the heating section 202, the expansion section smoothly transitions to the communication section 201 and the heating section 202, and the flow guiding end of the flow guiding column 3 is located within a space formed by the expansion section.

As shown in FIG. 6, in order to further increase capacity, a transition section is disposed between the communication section 201 and the heating section 202, an expansion section is disposed at a middle portion of the heating section 202, the transition section is of a cone frustum-shaped hole with a smaller upper portion and a larger lower portion, and the expansion section is coaxially disposed with the heating section 202 and a cross-sectional area of the expansion section is larger than a cross-sectional area of the heating section 202. The arrangement of the expansion section can reduce pressure inside the nozzle, and also increase a volume of the nozzle.

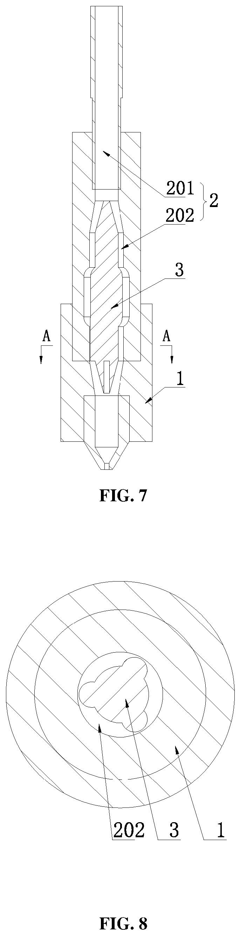

As shown in FIGs. 7 to 9, in order to improve heat conduction efficiency and facilitate installation, the flow guiding end of the flow guiding column 3 is located at the transition section, and a gap is formed between an outer side of the flow guiding end and an inner side of the transition section. An outer diameter of a portion of the flow guiding column 3 at the expansion section is larger than an outer diameter of a portion of the flow guiding column 3 above the expansion section. A plurality of outwardly protruding guide contact bars are circumferentially and uniformly distributed on an outer side of a portion of the flow guiding column 3 below the expansion section, the guide contact bars are in a long strip shape disposed along an axial direction of the flow guiding column 3, outer side surfaces of the guide contact bars are in an outwardly protruding semi-circular shape, and the guide contact bars are integrally formed with the flow guiding column 3 and are tangent to and in contact with an inner wall of a portion of the heating section 202 below the expansion section. The guide contact bars not only increase a heat conduction contact area between the nozzle and the filament, and at the same time, the guide contact bars can also be in an interference fit with an inner wall of the heating section 202, and the flow guiding column 3 only needs to be forcibly inserted into the heating section 202 of the nozzle body 1 to ensure relatively fixed installation of the flow guiding column 3, improving convenience of installation.

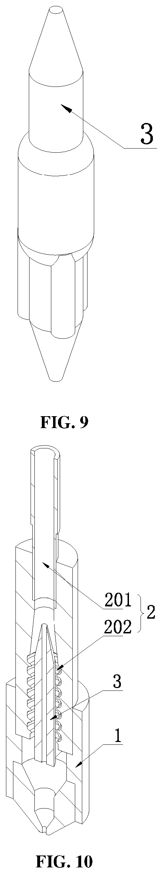

As shown in FIGs. 10-12, as another embodiment of this embodiment, annular grooves are transversely disposed on an inner wall of the heating section 202, and the grooves are a plurality of grooves arranged at intervals in array along an axial direction of the heating section 202; or annular grooves are coaxially disposed on an outer side of the flow guiding column 3, and the grooves are a plurality of grooves arranged at intervals in array along an axial direction of the flow guiding column 3.

The grooves not only increase a volume in the nozzle body 1, but also increase a heat conduction area, which is more conducive to ensuring that a sufficient amount of melted filament is present in the nozzle.

In a further structure, a protruding ring is disposed on a portion of the flow guiding column 3 at the groove, the protruding ring is integrally formed with the flow guiding column 3, an outer side surface of the protruding ring and a bottom surface of the groove are both in an arc shape, and a gap is formed between the outer side surface of the protruding ring and the bottom surface of the groove. A portion of the volume is reduced, but the heat conduction area is further increased, enabling the filament to melt quickly in the nozzle.

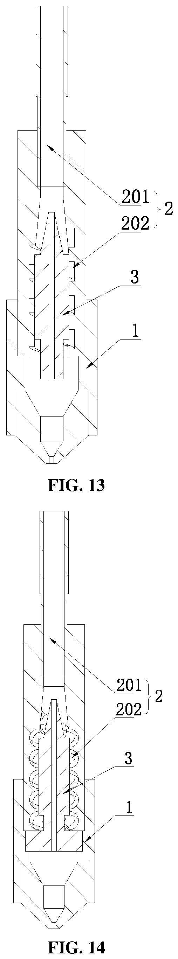

As shown in FIGs. 13-16, a spiral groove is disposed on the heating section 202, a top surface of the groove is in contact with a side wall of the flow guiding column 3, and a communicated gap is formed between a bottom surface of the groove and the side wall of the flow guiding column 3; or a spiral groove is disposed on an outer side of the flow guiding column 3, a top surface of the groove is in contact with an inner wall of the heating section 202, and a communicated gap is formed between a bottom surface of the groove and the inner wall of the heating section 202. Therefore, while increasing a heat conduction area, a heating duration is prolonged through a spiral structure, ensuring that the filament can be fully melted.

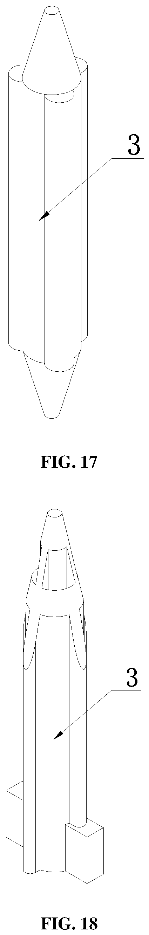

As shown in FIGs. 17 and 18, a plurality of outwardly protruding guide contact bars are circumferentially and uniformly distributed on an outer side of a middle portion of the flow guiding column 3, the guide contact bars are in a long strip shape disposed along an axial direction of the flow guiding column 3, outer side surfaces of the guide contact bars are in an outwardly protruding semi-circular shape, and the guide contact bars are integrally formed with the flow guiding column 3 and are tangent to and in contact with and in an interference fit with an inner wall of the heating section 202. The guide contact bars not only increase a heat conduction contact area between the nozzle and the filament, and at the same time, the guide contact bars can also be in an interference fit with the inner wall of the heating section 202, and the flow guiding column 3 only needs to be forcibly inserted into the heating section 202 of the nozzle body 1 to ensure relatively fixed installation of the flow guiding column 3, improving convenience of installation. In order to increase a flow amount of the melted filament, a plurality of through holes are disposed at a middle portion of the flow guiding column 3 along an axial direction thereof, and upper and lower ends of each through hole respectively communicate to a top surface and a bottom surface of the flow guiding column 3.

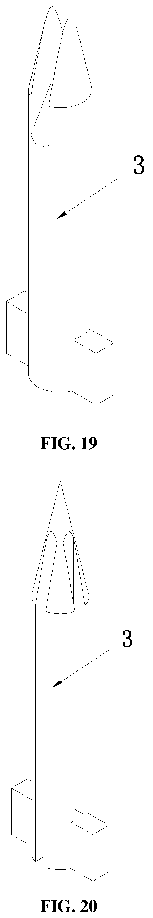

As shown in FIG. 19, in order to reduce pressure when the filament moves toward the interior of the nozzle, the flow guiding column 3 is provided with a pressure relief groove. The pressure relief groove is disposed on an upper portion of the flow guiding column 3 along a radial direction of the flow guiding column 3, a longitudinal section of the pressure relief groove is in a ∧ shape, a tip of the pressure relief groove is located at a tip of the flow guiding end, and two ends of the pressure relief groove respectively communicate to two sides of the flow guiding column 3.

As shown in FIGs. 20-23, another structure of the pressure relief groove is that an inwardly recessed pressure relief groove is disposed on an upper side surface of the flow guiding column 3. The pressure relief groove is in a vertical long strip shape, the pressure relief grooves are a plurality of grooves circumferentially and uniformly distributed along an axis center of the flow guiding column 3, and a cross-section of the pressure relief groove is rectangular, circular-segment shaped, or triangular. The pressure relief groove can be disposed only on an upper outer side of the flow guiding column 3, or can be disposed along the entire length of the outer side of the flow guiding column 3.

When the pressure relief groove is disposed only on an upper outer side of the flow guiding column 3, a lower end surface of the pressure relief groove is an inclined surface sloping downward on an outer side.

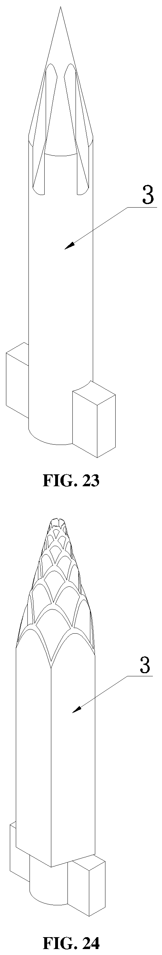

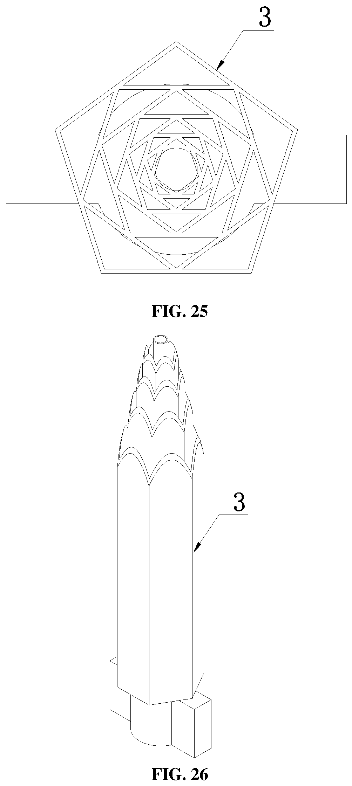

As shown in FIGs. 24 and 25, in order to improve a cutting effect, a preheated filament is longitudinally cut into a plurality of segments, thereby improving a heating effect on an unmelted filament. The flow guiding column 3 comprises a plurality of flow guiding tubes, a cross-section of each flow guiding tube is in a regular polygonal shape, the plurality of flow guiding tubes are coaxially and alternately nested with each other, an edge of an inner flow guiding tube is located at a middle portion of an inner side surface of an outer flow guiding tube, and the flow guiding end at an upper portion of the flow guiding column 3 is in a conical shape with a smaller upper portion and a larger lower portion.

As shown in FIGs. 26-29, in order to facilitate peeling off a melted portion on an outer side of a filament, thereby directly heating an unmelted portion at a middle portion of the filament, the flow guiding column 3 comprises a plurality of flow guiding tubes. A cross-section of each of all the flow guiding tubes is in an identical planar geometric shape, the plurality of flow guiding tubes are coaxially nested with each other, and a gap is formed between an outer side surface of an inner flow guiding tube and an inner side surface of an outer flow guiding tube; and
the flow guiding end at an upper portion of the flow guiding column 3 is in a conical shape with a smaller upper portion and a larger lower portion; or height values of all the flow guiding tubes decrease sequentially from inside to outside; or height values of all the flow guiding tubes increase sequentially from inside to outside.

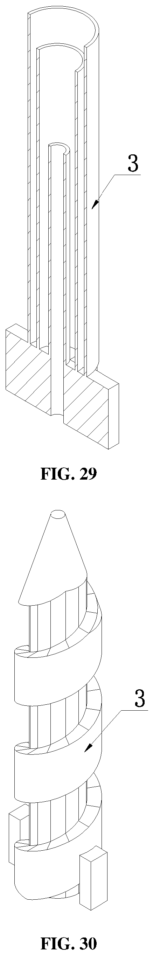

As shown in FIGs. 30-32, the flow guiding column 3 is coaxially rotatably or fixedly disposed within the heating section 202, and a middle portion of the flow guiding column 3 is in a spiral blade shape. The flow guiding column 3 being in a blade shape not only greatly increases a heat conduction area, but also can be driven to rotate by flow of a melted filament in the nozzle, so that the filament is heated more uniformly in the nozzle.

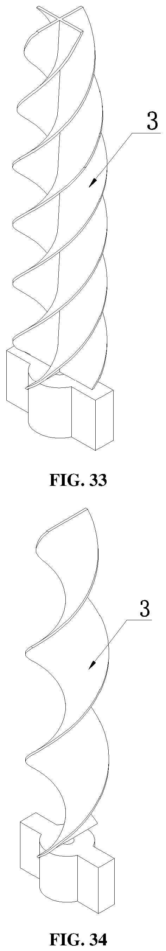

As shown in FIGs. 33 and 34, in order to further optimize a spiral structure, a cross-section of the flow guiding column 3 is in a cross shape or a linear shape, the flow guiding column 3 spirally rotates along an axis center thereof, and an outer diameter of a lower portion of the flow guiding column 3 is larger than an outer diameter of an upper portion of the flow guiding column 3.

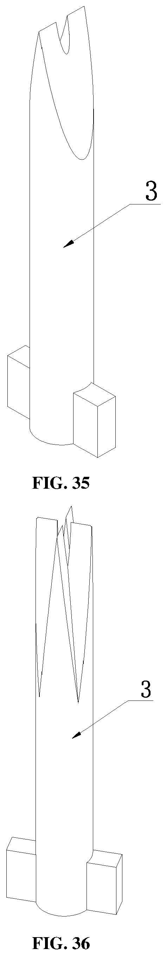

As shown in FIG. 35, a longitudinal section of the flow guiding end of the flow guiding column 3 is in a triangular shape with a tip facing upward, an end portion of the flow guiding end is located at a junction between the communication section 201 and the heating section 202, the end portion of the flow guiding end is in an upward knife-edge shape, which facilitates longitudinal cutting of the filament from a middle portion, and cutting an axis center portion of the filament that is most difficult to melt, thereby improving heating efficiency.

As shown in FIG. 36, in order to further optimize a shape of the knife-edge structure, by changing from cutting into two segments to cutting into four segments, a cross-section of the flow guiding end of the flow guiding column 3 is in a cross shape, wherein a longitudinal section of each side of the cross-shaped flow guiding end is in a triangular shape with a tip facing upward, and an end portion of the flow guiding end is located at a junction between the communication section 201 and the heating section 202.

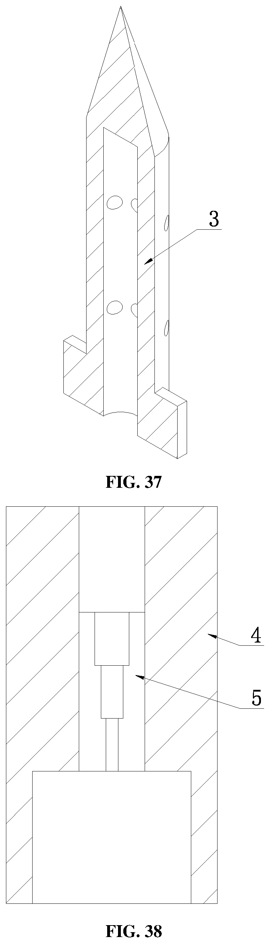

As shown in FIG. 37, the flow guiding column 3 is in a straight tubular shape with the flow guiding end closed and the other end open, wherein a plurality of sets of hole groups are arranged at intervals in array along an axial direction of the flow guiding column 3, each hole group comprises a plurality of through holes, and one end of each through hole communicates to an interior of the flow guiding column 3 and the other end communicates to a gap formed between the flow guiding column 3 and the heating section 202. A filament to be further melted enters the interior of the flow guiding column 3 from the through holes, increasing a volume and improving heating efficiency.

In order to reduce wear on the flow guiding column 3 caused by a filament entering the heating section 202, and increase a service life of the nozzle, an end portion of the flow guiding end of the flow guiding column 3 is provided with a wear-resistant portion made of a wear-resistant material; and specifically, the wear-resistant portion can be a coating of the wear-resistant material, or the flow guiding end as a whole can be made of the wear-resistant material.

According to another aspect of embodiments of the present invention, embodiments of the present invention provide a preheating element for a 3D printer, and the preheating element for a 3D printer according to embodiments of the present invention is described below in conjunction with FIGs. 38 to 44.

The preheating element 4 is configured to be connected to the nozzle of any one of the above embodiments, and the preheating element 4 is disposed at a front end of the communication section 201 of the flow passage 2 of the nozzle body 1 of the nozzle. A preheating channel 5 is disposed at a middle portion of the preheating element 4 along an axial direction of the preheating element 4, a lower end of the preheating channel 5 communicates to the communication section 201 of the flow passage 2 of the nozzle body 1, and the preheating element 4 is thermally conductively connected to a heat source.

The preheating element 4 is disposed at an upper side of the communication section 201, which increases a preliminary melting time of the filament. Further, in the preheating element 4, the melted filament can also be peeled off from the unmelted filament, so that the preheating element 4 directly heats the unmelted filament after peeling, further improving melting efficiency.

An introduction section is disposed at an upper portion of the preheating channel 5, the preheating channel 5 comprises one removal section and a plurality of flow guiding sections. The removal section is coaxially disposed with the introduction section, the flow guiding sections are disposed at an outer side of the removal section, and a side of each flow guiding section adjacent to the removal section communicates to the removal section.

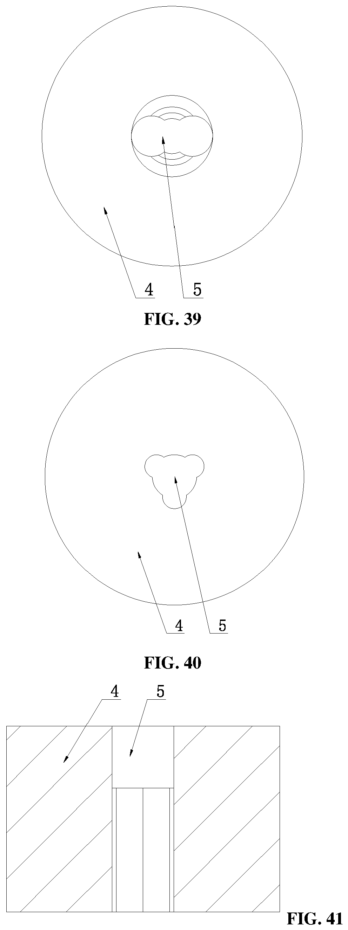

As shown in FIGs. 38 and 39, in order to optimize a product structure, a cylindrical introduction section is disposed at an upper portion of the preheating channel 5. The preheating channel 5 comprises one removal section and two flow guiding sections, a cross-section of the removal section is in a circular-segment shape and is coaxially disposed with the introduction section, and the two flow guiding sections are respectively disposed in a mirror-image arrangement on two sides of the removal section. A cross-section of each flow guiding section is in a circular-segment shape, a circular surface of each flow guiding section is on a side away from the removal section and can be tangent to an inner wall of the introduction section, and a side of each flow guiding section adjacent to the removal section communicates to the removal section. The removal section is in a multi-step stepped hole shape with a larger upper portion and a smaller lower portion, and can also be in a tapered hole shape with a larger upper portion and a smaller lower portion. During preheating, a melted portion on an outer side of the filament is gradually peeled off by the stepped hole structure of the removal section, and then flows down through the flow guiding sections.

As shown in FIG. 40, in another embodiment, the preheating channel 5 comprises one removal section and a plurality of flow guiding sections, wherein a cross-section of the removal section is circular, the plurality of flow guiding sections are circumferentially and uniformly distributed along the removal section, a side of each flow guiding section adjacent to the removal section communicates to the removal section, and a cross-section of each flow guiding section is in a circular-segment shape or a rectangular shape. The melted portion on an outer side of the filament flows down through the flow guiding sections.

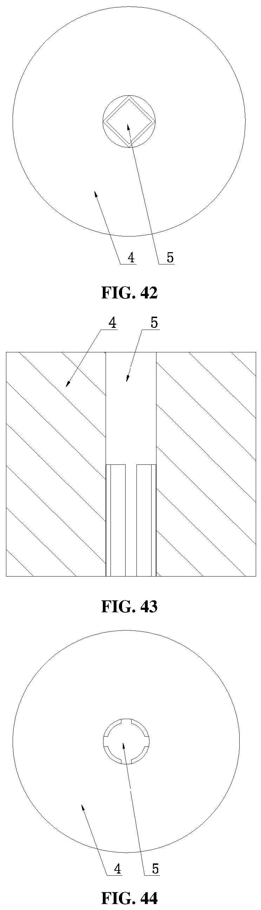

As shown in FIGs. 41 and 42, in another embodiment, a cross-section of the preheating channel 5 is circular, a removal member is disposed at a lower portion of the preheating channel 5, the removal member is in a polygonal tubular shape, and an edge of the removal member is located at an inner wall of the preheating channel 5. The melted portion on an outer side of the filament is peeled off through the removal member.

As shown in FIGs. 43 and 44, in another embodiment, a cross-section of the preheating channel 5 is circular, a removal member is disposed at a lower portion of the preheating channel 5, the removal member is in a long strip shape disposed along an axial direction of a side wall of the preheating channel 5, and a plurality of removal members are circumferentially and uniformly distributed at intervals along an inner wall of the preheating channel 5.

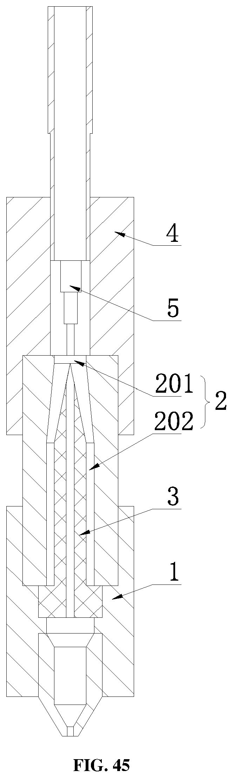

According to yet another aspect of embodiments of the present invention, embodiments of the present invention provide a nozzle assembly for a 3D printer. As shown in FIG. 45, the nozzle assembly comprises a nozzle and a preheating element 4. The preheating element 4 preheats a filament, and peels off a melted portion on an outer side of the filament; and then the filament enters a gap formed between the heating section 202 and the flow guiding column 3, increasing a heat receiving area, so that the filament in the nozzle is fully heated, improving melting efficiency.

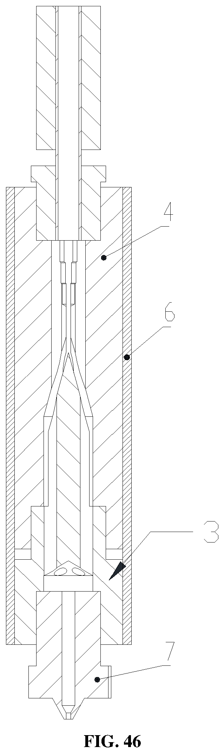

According to yet another aspect of embodiments of the present invention, embodiments of the present invention provide a nozzle assembly for a 3D printer, as shown in FIG. 46, a nozzle 7 is fixedly connected below the flow guiding column 3 through a boss, in which the connection mode can be threaded connection or interference fit, etc. A heat source is sleeved outside the boss of the preheating element 4 and the flow guiding column 3, the heat source employs a heating ring 6, and other common heating structures in the art such as a heating sheet can also be employed. The heat source being directly connected to the boss of the flow guiding column 3 facilitates rapid heating of the flow guiding column 3, thereby facilitating rapid heating of the filament in contact with the flow guiding column 3, and improving melting efficiency.

Other configurations of the nozzle for a 3D printer, the preheating element 4, and the nozzle assembly of the above embodiments can employ various technical solutions known to those of ordinary skill in the art now and in the future, and will not be described in detail here.

In the description of the present specification, it should be understood that the orientation or positional relationship indicated by terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. is based on the orientation or positional relationship shown in the drawings, and is only for the convenience of describing the present invention and simplifying the description, rather than indicating or implying that the referred device or element must have a specific orientation, and be constructed and operated in a specific orientation, and therefore should not be construed as limiting the present invention.

Furthermore, the terms "first" and "second" are used for descriptive purposes only, and should not be construed as indicating or implying relative importance or implicitly indicating the number of indicated technical features. Thus, a feature defined as "first" or "second" can explicitly or implicitly include one or more of the features.

In the present invention, unless otherwise expressly specified and defined, terms such as "install", "link", "connect", "fix" should be broadly understood, for example, can be a fixed connection, or a detachable connection, or integrated; can be a mechanical connection, or an electrical connection, or can also be communication; can be a direct connection, or an indirect connection through an intermediary, or can be an internal communication of two elements or an interaction relationship between two elements. For those of ordinary skill in the art, the specific meanings of the above terms in the present invention can be understood according to specific circumstances.

In the present invention, unless otherwise expressly specified and defined, a first feature being "on" or "below" a second feature can include the first and second features being in direct contact, or can include the first and second features not being in direct contact but being in contact through another feature therebetween. Moreover, a first feature being "above", "over" and "on top of" a second feature includes the first feature being directly above and obliquely above the second feature, or merely indicating that a horizontal height of the first feature is higher than that of the second feature. A first feature being "below", "under" and "beneath" a second feature includes the first feature being directly above and obliquely above the second feature, or merely indicating that a horizontal height of the first feature is less than that of the second feature.

The foregoing disclosure provides many different embodiments or examples for implementing different structures of the present invention. In order to simplify the disclosure of the present invention, components and settings of a specific example are described above. Of course, they are merely examples, and are not intended to limit the present invention. In addition, the present invention can repeat reference numerals and/or reference letters in different examples, and such repetition is for the purpose of simplification and clarity, and does not itself indicate a relationship between the various embodiments and/or settings discussed.

The above descriptions are only specific embodiments of the present invention, but the protection scope of the present invention is not limited thereto, and any person skilled in the art can readily conceive of various changes or substitutions within the technical scope disclosed in the present invention, which should all be covered within the protection scope of the present invention. Therefore, the protection scope of the present invention should be subject to the protection scope of the claims.

## Claims

1. A nozzle for a 3D printer, the nozzle comprising a nozzle body (1), **characterized in that** a flow passage (2) is disposed within the nozzle body (1) along an axial direction of the nozzle body (1), the flow passage (2) comprises an upper communication section (201) and a lower heating section (202), an inner diameter of the communication section (201) is smaller than an inner diameter of the heating section (202), a flow guiding column (3) is disposed within the heating section (202), a gap is formed between a side outer wall of the flow guiding column (3) and a side inner wall of the heating section (202), and a flow guiding end of the flow guiding column (3) faces a junction between the communication section (201) and the heating section (202).

2. The nozzle for a 3D printer according to claim 1, wherein a smooth transition section is disposed between the communication section (201) and the heating section (202), the flow guiding end of the flow guiding column (3) is located at the transition section, and a gap is formed between an outer side of the flow guiding end and an inner side of the transition section.

3. The nozzle for a 3D printer according to claim 1, wherein the flow guiding end of the flow guiding column (3) is in a conical shape with a smaller upper portion and a larger lower portion, and an end portion of the flow guiding end is located at the junction between the communication section (201) and the heating section (202).

4. The nozzle for a 3D printer according to claim 1, wherein a through hole is disposed at an axis center of the flow guiding column (3).

5. The nozzle for a 3D printer according to claim 1, wherein an expansion section is coaxially disposed between the communication section (201) and the heating section (202), a cross-sectional area of the expansion section is larger than a cross-sectional area of the communication section (201) or the heating section (202), the expansion section smoothly transitions to the communication section (201) and the heating section (202), and the flow guiding end of the flow guiding column (3) is located within a space formed by the expansion section.

6. The nozzle for a 3D printer according to claim 1, wherein a transition section is disposed between the communication section (201) and the heating section (202), an expansion section is disposed at a middle portion of the heating section (202), the transition section is of a cone frustum-shaped hole with a smaller upper portion and a larger lower portion, and the expansion section is coaxially disposed with the heating section (202) and a cross-sectional area of the expansion section is larger than a cross-sectional area of the heating section (202).

7. The nozzle for a 3D printer according to claim 6, wherein the flow guiding end of the flow guiding column (3) is located at the transition section, a gap is formed between an outer side of the flow guiding end and an inner side of the transition section, an outer diameter of a portion of the flow guiding column (3) at the expansion section is larger than an outer diameter of a portion of the flow guiding column (3) above the expansion section, a plurality of outwardly protruding guide contact bars are circumferentially and uniformly distributed on an outer side of a portion of the flow guiding column (3) below the expansion section, and the guide contact bars are integrally formed with the flow guiding column (3) and are tangent to and in contact with an inner wall of a portion of the heating section (202) below the expansion section.

8. The nozzle for a 3D printer according to claim 1, wherein annular grooves are transversely disposed on an inner wall of the heating section (202), and the annular grooves are a plurality of grooves arranged at intervals in array along an axial direction of the heating section (202); or annular grooves are coaxially disposed on an outer side of the flow guiding column (3), and the annular grooves are a plurality of grooves arranged at intervals in array along an axial direction of the flow guiding column (3).

9. The nozzle for a 3D printer according to claim 1, wherein a spiral groove is disposed on the heating section (202), a top surface of the spiral groove is in contact with a side wall of the flow guiding column (3), and a communicated gap is formed between a bottom surface of the spiral groove and the side wall of the flow guiding column (3); or a spiral groove is disposed on an outer side of the flow guiding column (3), a top surface of the spiral groove is in contact with an inner wall of the heating section (202), and a communicated gap is formed between a bottom surface of the spiral groove and the inner wall of the heating section (202).

10. The nozzle for a 3D printer according to claim 1, wherein a plurality of outwardly protruding guide contact bars are circumferentially and uniformly distributed on an outer side of a middle portion of the flow guiding column (3), and the guide contact bars are integrally formed with the flow guiding column (3) and are tangent to and in contact with or in an interference fit with an inner wall of the heating section (202).

11. The nozzle for a 3D printer according to claim 1, wherein the flow guiding column (3) is provided with a pressure relief groove, the pressure relief groove is disposed on an upper portion of the flow guiding column (3) along a radial direction of the flow guiding column (3), a longitudinal section of the pressure relief groove is in a ∧ shape, a tip of the pressure relief groove is located at a tip of the flow guiding end, and two ends of the pressure relief groove respectively communicate to two sides of the flow guiding column (3).

12. The nozzle for a 3D printer according to claim 1, wherein inwardly recessed pressure relief grooves are disposed on a side surface of the flow guiding column (3), the pressure relief groove is in a vertical long strip shape, the pressure relief grooves are a plurality of grooves circumferentially and uniformly distributed along an axis center of the flow guiding column (3), and a cross-section of the pressure relief groove is rectangular, circular-segment shaped, or triangular.

13. The nozzle for a 3D printer according to claim 1, wherein the flow guiding column (3) comprises a plurality of flow guiding tubes, a cross-section of each flow guiding tube is in a regular polygonal shape, the plurality of flow guiding tubes are coaxially and alternately nested with each other, an edge of an inner flow guiding tube is located at a middle portion of an inner side surface of an outer flow guiding tube, and the flow guiding end at an upper portion of the flow guiding column (3) is in a conical shape with a smaller upper portion and a larger lower portion.

14. The nozzle for a 3D printer according to claim 1, wherein the flow guiding column (3) comprises a plurality of flow guiding tubes, a cross-section of each of all the flow guiding tubes is in an identical planar geometric shape, the plurality of flow guiding tubes are coaxially nested with each other, and a gap is formed between an outer side surface of an inner flow guiding tube and an inner side surface of an outer flow guiding tube; and
the flow guiding end at an upper portion of the flow guiding column (3) is in a conical shape with a smaller upper portion and a larger lower portion; or height values of all the flow guiding tubes decrease sequentially from inside to outside; or height values of all the flow guiding tubes increase sequentially from inside to outside.

15. The nozzle for a 3D printer according to claim 1, wherein the flow guiding column (3) is coaxially rotatably or fixedly disposed within the heating section (202), and a middle portion of the flow guiding column (3) is in a spiral blade shape.

16. The nozzle for a 3D printer according to claim 15, wherein a cross-section of the flow guiding column (3) is in a cross shape or a linear shape, the flow guiding column (3) spirally rotates along an axis center thereof, and an outer diameter of a lower portion of the flow guiding column (3) is larger than an outer diameter of an upper portion of the flow guiding column (3).

17. The nozzle for a 3D printer according to claim 1, wherein a longitudinal section of the flow guiding end of the flow guiding column (3) is in a triangular shape with a tip facing upward, and an end portion of the flow guiding end is located at the junction between the communication section (201) and the heating section (202).

18. The nozzle for a 3D printer according to claim 1, wherein a cross-section of the flow guiding end of the flow guiding column (3) is in a cross shape, a longitudinal section of each side of the cross-shaped flow guiding end is in a triangular shape with a tip facing upward, and an end portion of the flow guiding end is located at the junction between the communication section (201) and the heating section (202).

19. The nozzle for a 3D printer according to claim 1, wherein the flow guiding column (3) is in a straight tubular shape with the flow guiding end closed and the other end open, a plurality of sets of hole groups are arranged in array at intervals along an axial direction of the flow guiding column (3), each hole group comprises a plurality of through holes, and one end of each through hole communicates to an interior of the flow guiding column (3) and the other end communicates to a gap formed between the flow guiding column (3) and the heating section (202).

20. The nozzle for a 3D printer according to claim 1, wherein an end portion of the flow guiding end of the flow guiding column (3) is provided with a wear-resistant portion made of a wear-resistant material.

21. A preheating element for a 3D printer, **characterized in that** the preheating element (4) is configured to be connected to the nozzle according to any one of claims 1-20, and the preheating element (4) is disposed at a front end of the communication section (201) of the flow passage (2) of the nozzle body (1) of the nozzle, wherein a preheating channel (5) is disposed at a middle portion of the preheating element (4) along an axial direction of the preheating element (4), a lower end of the preheating channel (5) communicates to the communication section (201) of the flow passage (2) of the nozzle body (1), and the preheating element (4) is thermally conductively connected to a heat source or directly connected to the heat source.

22. The preheating element for a 3D printer according to claim 21, wherein an introduction section is disposed at an upper portion of the preheating channel, the preheating channel (5) comprises one removal section and a plurality of flow guiding sections, the removal section is coaxially disposed with the introduction section, the flow guiding sections are disposed at an outer side of the removal section, and a side of each flow guiding section adjacent to the removal section communicates to the removal section; and
the removal section is in a multi-step stepped hole shape with a larger upper portion and a smaller lower portion.

23. The preheating element for a 3D printer according to claim 21, wherein the preheating channel (5) comprises one removal section and a plurality of flow guiding sections, a cross-section of the removal section is circular, the plurality of flow guiding sections are circumferentially and uniformly distributed along the removal section, and a side of each flow guiding section adjacent to the removal section communicates to the removal section; and
a cross-section of each flow guiding section is in a circular-segment shape or a rectangular shape.

24. The preheating element for a 3D printer according to claim 21, wherein a removal member is disposed at a lower portion of the preheating channel (5), the removal member is in a polygonal tubular shape, and an edge of the removal member is located at an inner wall of the preheating channel (5).

25. The preheating element for a 3D printer according to claim 21, wherein removal members are disposed at a lower portion of the preheating channel (5), the removal member is in a long strip shape disposed along an axial direction of a side wall of the preheating channel (5), and a plurality of removal members are circumferentially and uniformly distributed at intervals along an inner wall of the preheating channel (5).

26. A nozzle assembly for a 3D printer, **characterized in that** the nozzle assembly comprises the nozzle for a 3D printer according to any one of claims 1-20 and the preheating element for a 3D printer according to any one of claims 21-25.
